# EUROPEAN PATENT APPLICATION

(11) **EP 2 803 950 A1**
(43) Date of publication of application: **19.11.2014**
(21) Application number: 13275117.3
(22) Date of filing: 14.05.2013
(51) Int. Cl.: G01D 5/353

(54) **Distributed sensor**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

There is disclosed a distributed sensor for mounting to a surface, the distributed sensor comprising: a light source for generating an interrogatory light signal; an optical waveguide having a first end and being arranged to admit at said first end the interrogatory light signal; and a detector arranged to detect backscattered signals returned to the first end of the waveguide, wherein the waveguide comprises at least one meander.

## Description

The present invention relates to a distributed sensor.

It is known from, for example, WO2012076873 to provide a distributed sensor system whereby a laser illuminates a length of waveguide and light scattered back along the waveguide towards the laser can be detected. Subsequently, from such backscattered light, the disturbances to which the waveguide may be exposed can be inferred. The location of the disturbance can also be inferred. Often the disturbance can be associated with temperature change, acoustic vibration, or strain.

However, such systems tend to be limited as to the spatial resolution which they can offer.

According to a first aspect of the invention, there is provided a distributed sensor for mounting on a surface, the distributed sensor comprising: a light source for generating an interrogatory light signal; an optical waveguide having a first end and being arranged to admit at said first end the interrogatory light signal; and a detector arranged to detect backscattered signals returned to the first end of the waveguide, wherein the waveguide comprises at least one meander.

The provision of the meander will tend to provide a higher spatial resolution for detecting disturbances along the surface. Thus a clearer understanding of the disturbances, for example the vibrations, the waveguide is exposed to, and a more precise view of where such disturbances are occurring, can be developed.

Each meander tends to define a detection region and typically the length of waveguide forming each meander will be at least twice the length of the detection region.

Typically the light source is a laser and the interrogatory light signal is a pulsed signal.

The meander may comprise a concentrated meander, the concentrated meander defining a detection region along the waveguide, and wherein the sensor is operable such that the detector may detect signals returned from the detection region containing the concentrated meander.

The provision of the concentrated meander, being concentrated into a given region, enables the sensor to monitor a specific area of interest at the surface. As such, this further tends to obviate limitations resulting from the limit on spatial resolution imposed by the inherent system characteristics.

Where a concentrated meander is provided, it becomes possible that the dimensions of the region containing the meander (the detection region) determine the highest spatial resolution. As such it becomes possible to design a sensor that is tailored to fit any one of a number of various uses by suitably arranging (e.g. coiling) a certain amount of waveguide into a certain region.

Typically, if the waveguide provided by a distributed sensor has an inherent spatial resolution of X metres, but a desired spatial resolution along the surface is Y (where X is greater than Y) then X metres of waveguide can be arranged as a meander that is contained within a defined region of length Y.

The waveguide may comprise a further concentrated meander defining a further detection region along the waveguide and wherein the detector is operable to detect signals from the further detection region associated with the further concentrated meander.

Thus the sensor can monitor a pair of detection regions. Still further concentrated meanders may be added to the waveguide to monitor even more detection regions.

Further, the waveguide may comprise a plurality of linear sections interconnecting a plurality of concentrated meanders and the waveguide may be arranged to provide an array of concentrated meanders.

The concentrated meander may comprise the form of a coil, or a spiral or a serpentine path.

Alternatively or additionally, the meander may be a regular continuous meander.

Such a form of meander allows a greater spatial resolution across the whole length of the surface covered by the waveguide. Where particular areas of interest exist on the surface, concentrated meanders could be provided at the relevant point/region along the continuous meander.

Typically the waveguide will be a single mode optical fibre

Compared to other forms of waveguide, such a fibre tends to provide a less complex backscatter signal and thereby tends to facilitate detection of backscatter signals (for example by providing a higher signal-to-noise ratio) arising from disturbances at the fibre.

Further, a plurality of single mode fibres may be provided at the waveguide so as to provide redundancy in case of failure of one single mode fibre.

The sensor may comprise a circulator, the circulator operably interconnecting the first end of the waveguide, the light source and the detector such that signals output from the light source may be input to the first end of the waveguide, and signals output from the first end of the waveguide may be input to the detector.

The sensor may be provided with a substrate, the first substrate surface having the waveguide mounted thereto and the second substrate surface being suitable for mounting to a surface.

The provision of such a substrate, which may be formed from a thin flexible film or tape of material, or a plurality of layers of such a film, can enable the waveguide to be provided in a form that is readily installable onto surfaces.

To further assist in this end, the substrate may be self-adhesive, in so far as it may have a layer of adhesive applied to one or both sides. There may be further provided a sacrificial substrate or tape which covers the adhesive layer during transport to the installation surface.

The sensor may be provided with a cover, mounted on top of the substrate and waveguide, to thereby protectively enclose the waveguide.

At least one of the substrate or waveguide cover may be provided by a layer of composite material.

As such there can be provided a waveguide embedded within a composite structure such as a panel. Such a composite structure may form an integral structural part of a device which is to be monitored using the sensor. For example the composite may be Glass Reinforced Polymer (GRP) or Carbon Fibre Reinforced Polymer (CRP).

According to a second aspect of the invention there is provided a method of monitoring an area of interest at a surface, the method comprising the steps of:
I. providing a distributed sensor according to the first aspect of the invention, and
II. arranging the waveguide at the surface such that the meander is mounted at the area of interest.

Further, the method may comprise the steps of:
a) providing the waveguide with a concentrated meander defining a detection region, and
b) mounting the concentrated meander at the area of interest.

Still further, the method may comprise the steps of:
i) determining the inherent spatial resolution of the distributed sensor system;
ii) determining a target spatial resolution, the target spatial resolution being finer that the inherent spatial resolution; and
iii) providing a plurality of concentrated meanders to define a plurality of detection regions spaced at an interval corresponding to the target spatial resolution where sufficient waveguide material is arranged within the concentrated meander to effect the target spatial resolution.

Accordingly the method can allow specific points (or areas) on a surface to be monitored and the spatial resolution can tend to be limited by the dimensions of the detection region (e.g. the footprint of the meander) rather than the inherent spatial resolution.

So that the invention may be well understood, non-limiting exemplary embodiments thereof shall now be described with reference to the following figures, of which:
Figure 1 shows schematically a first embodiment of the invention comprising concentrated meanders at the waveguide;
Figure 2 shows schematically a first alternative form of concentrated meander;
Figure 3 shows schematically a second alternative form of concentrated meander; and
Figure 4 shows schematically a continuous meander for the waveguide.

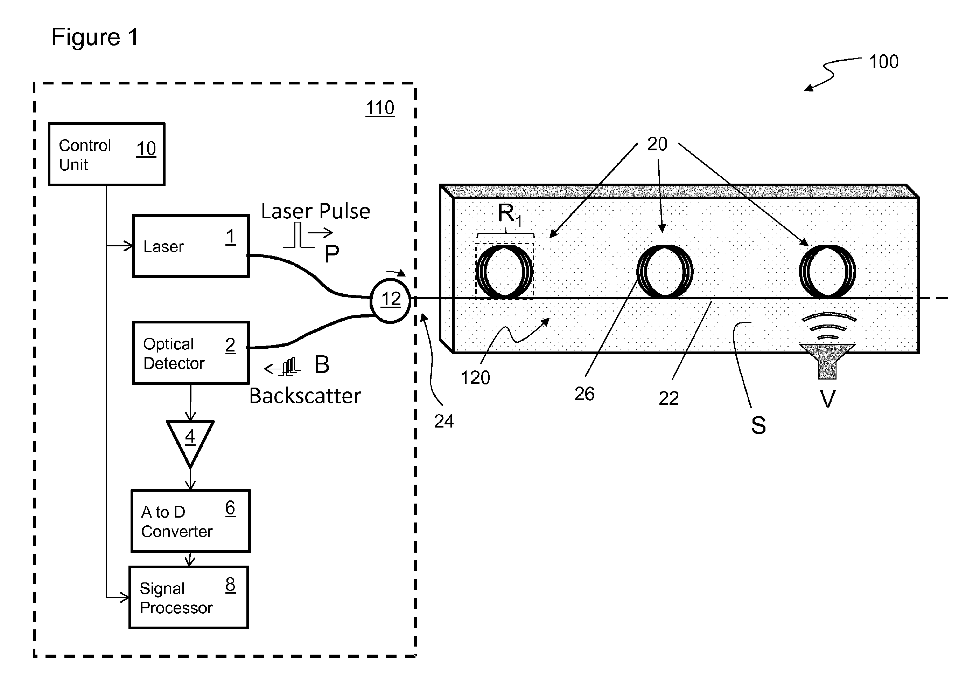

Referring to Figure 1, a first embodiment of a distributed sensor is shown generally at 100 and comprises a signal unit 110 and a waveguide 120. The signal unit 110 is operably connected to the waveguide 120 to enable transmission of interrogatory signals into a first end 24 of the waveguide 120 and to enable reception of return signals from the first end 24 of the waveguide 120. The waveguide 120 is shown mounted on a surface S.

The signal unit 110 comprises a control unit 10, an electromagnetic (EM) radiation source 1, a circulator 12, an optical detector 2, an amplifier 4, an analogue to digital converter (ADC) 6 and a signal processor 8.

The control unit 10 and EM radiation source 1, which in this particular example is a laser light source 1, enable the transmission of interrogation signals into the waveguide 120. The control unit 10 is operably connected to the laser light source 1 such that in response to an electrical signal input to the laser 1 from the control unit 10, a laser pulse signal P can be generated.

The optical detector 2, the amplifier 4, the ADC 6, the signal processor 8, and the control unit 10 enable the detection of backscatter signals B and in turn the associated disturbances at the waveguide 120. The optical detector 2 is arranged to receive an optical signal B from the waveguide 120 and convert it into an electrical signal. The detector 2 is operably connected to the amplifier 4 so as to be able to feed into the amplifier 4 the electrical signal representative of optical signal B. The amplifier 4 is operably connected to the ADC 6 such that the amplifier 4 may amplify the signal received from the detector 2 and output that amplified signal to the ADC 6. The ADC 6 is for converting the amplified signal into a digital data signal and is further connected to the signal processor 8 so as to be able to feed the digital signal representing the optical signal B into the signal processor 8. The signal processor 8 is further interfaced with the control unit 10 so as to be able to communicate therewith.

The circulator 12 comprises three ports. The first port is optically connected to the output from the laser 1. The second port is optically connected to the first end 24 of the waveguide 120. The third port is optically connected to the optical detector 2.

With such an arrangement of circulator 12, optical signals P propagating from the laser 1 are fed into the first end 24 of the waveguide 120 to propagate along the waveguide 120. Further, backscattered light signals B propagating from the waveguide 120 towards the first end 24 of the waveguide 120 are fed into the optical detector 2.

In the embodiment shown in Figure 1, the waveguide 120 extends away from the circulator 12 and comprises linear portions 22 of waveguide alternating with concentrated meander portions of waveguide 20. The linear portions 22 are of equal length to one another. Further, each concentrated meander portion 20 is formed from the same overall length of waveguide as each of the other concentrated meander portions 20, which overall length is concentrated into the same space, or detection region R, as each of the other concentrated meander portions 20.

The concentrated meanders 20 may take on a number of forms. The embodiment shown in Figure 1 provides coils 26 of waveguide, each coil 26 in effect being a tight helical winding (the axis of the helical winding being generally perpendicular, plus or minus 45°, to the direction in which the waveguide extends) which defines, and is bounded by, a detection region R₁.

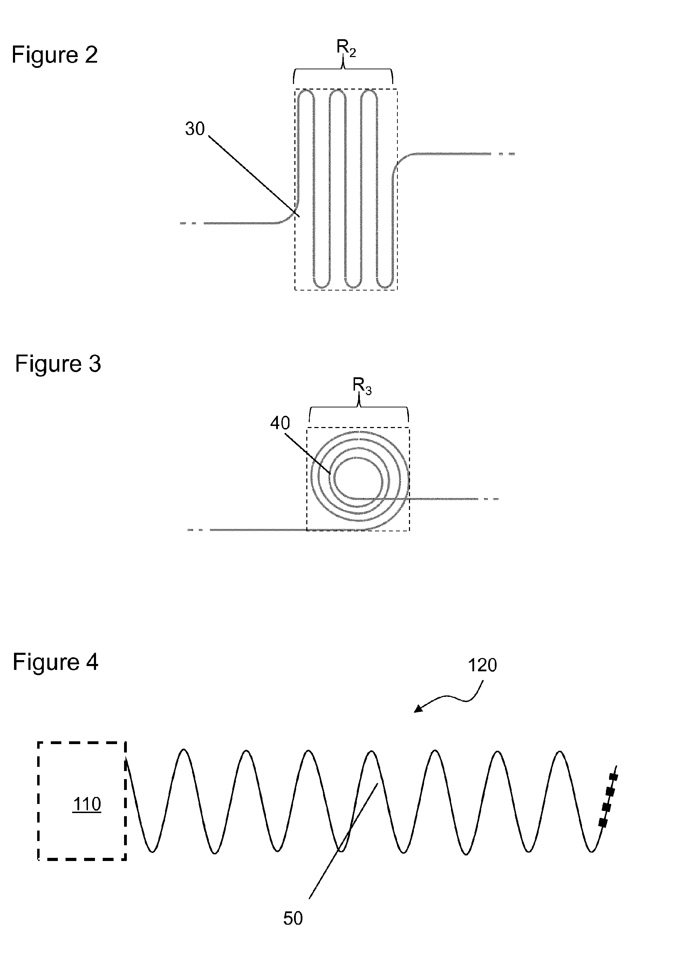

Alternatively, and referring to Figure 2, the concentrated meanders 20 may have the form of a serpentine path 30 bounded by detection region R₂.

Alternatively, and referring to Figure 3, the concentrated meanders 20 may have the form of a spiral 40 bounded by detection region R₃.

In operation, the sensor 100 may operate to detect a disturbance or disturbances at one or many regions along the length of the waveguide 120. In particular the sensor 100 may operate to monitor acoustic vibrations of the waveguide 120.

In order to perform such monitoring, the control unit 10 issues an instruction to the laser 1, such that at a particular time an optical signal in the form of an optical pulse P is generated and fed into the first port of the circulator 12. The circulator 12 relays pulse signal P to the second port of the circulator 12 and thus into the waveguide 120 to propagate onwards.

As the pulse P propagates along the waveguide 120, a portion of light is scattered back towards the circulator. Such backscattering tends to occur as a result of various known physical phenomena such as, in particular, Rayleigh scattering.

Accordingly, light will tend to be backscattered from non-transient inhomogeneities (such as joints or imperfections) in the fibre waveguide.

Furthermore, if a portion of the waveguide is displaced, e.g. such as may result from an acoustic vibration disturbance V, the backscattered light will tend to be modulated. Such modulation will tend to occur in quantifiable relation to the disturbance V.

Aggregated light signals B (which may comprise backscattered light from the non-transient inhomogeneities and the backscattered light caused by vibration V) that are backscattered along the waveguide 120 will tend to propagate onto the circulator 12 at its second port and thus be relayed to the third port and onwards to the optical detector 2. Such light signals B are converted to analogue electrical signals at the detector 2 and then fed onwards, to the amplifier 4 for amplification and to the ADC 6 for digitisation. As such, the signals are converted into a digital data signal which can be processed at the signal processor 8.

Next, the signal processor 8 has fed into it the digital data signal representing the optical signal B and also has fed into it data signals from the control unit 10 relating to the nature (e.g. waveform, duration, transmission time) of the original pulse signal P. With such data received, the processor 8 may perform an analysis to extract information relating to the disturbance V. In particular the processor 8 is able to deduce the distance along the waveguide 120 where the disturbance is taking place, and is able to deduce the amplitude of the disturbance.

In conventional arrangements, because of various physical limitations of signal units and waveguides (e.g. the interrogatory laser pulse must have a finite length to permit reliable backscatter detection), the deduced distance along the waveguide 120 can only be determined as being within a given range (e.g. 5m ± 0.5m).

However, because in this invention the waveguide is provided with a meander, a finer spatial resolution is achievable. In the present embodiment, where concentrated meanders are provided, it is possible to know which concentrated meander the disturbance is associated with and therefore possible to know with greater certainty where the disturbance is taking place.

Thus in configuring the sensor 100, the amount of waveguide 120 used to form each meander will tend to vary with the inherent spatial resolution of the distributed sensor system, with the desired spatial resolution requirements, and with the space (detection region) available for each meander.

For example if the inherent spatial resolution of the system is 5m but an effective spatial resolution of 0.3m is desired then 5m of waveguide fibre can be wound into a coil having a diameter of 0.3m. Thus there is provided a meander giving an improved spatial resolution that is equal to the maximum dimension of the region defined by the meander.

In a further embodiment, the waveguide 120 may have the form of a continuous regular meander. Referring to figure 4, one such continuous regular meander 50 has a planar form approximating to a sinusoid. Alternative forms of continuous regular meander would include a helical waveguide form (e.g. applied to the surface of a cylinder such that the axis of the helix is generally parallel with that of the cylinder) or a planar form approximating to a square wave, saw tooth wave etc.. As the continuous regular meander would tend to increase the waveguide meander density (especially as compared to a completely linear waveguide arrangement) the spatial resolution of the sensor would tend to improve.

The meanders, which may be coils, spirals or serpentine paths may be fixed into the correct form by pressing the optic fibre into preformed tracks/channels in a mould or winding round a mandrel. A hard-setting bonding agent may be added to the fibre in the tracks/channels, or to the winding, such that when it cures the mould or mandrel may be removed to provide a waveguide having the desired form.

The so formed waveguide may then be bonded onto a surface to be able to monitor acoustic signals (and/or other disturbances) that the surface is exposed to. As such, the waveguide will typically be bonded to the surface using a bonding agent which gives efficient acoustic coupling between the waveguide and the surface. The other components of the distributed sensor are then mounted at the surface, or at least in proximity thereto, such that the first end 24 of the waveguide can connect to the circulator 12.

Alternatively the waveguide may be provided as part of a pre-formed laminar structure. In providing such a structure, the waveguide may initially be laid-up onto a laminar intermediate substrate (e.g. a polymeric film) and bonded thereto in the appropriate form (the substrate may be provided with guide tracks/channels for laying-up the waveguide fibres, which may be formed by built-up layers of the film), the intermediate substrate being such that it can be readily bonded onto the surface - either on the opposing side to the side which the waveguide is bonded to (in which case an optional cover may be bonded onto the waveguide-side of the substrate), or on the same side, provided that this does not tend to damage the waveguide (for instance the waveguide tracks/channels may be recessed into the substrate). The intermediate substrate may be self-adhesive on one or both sides to assist with bonding.

Alternatively, the waveguide may be embedded within a composite panel. To form such, the waveguide may be laid up in a desired form (which desired form may be arrived at by the above process) onto a substrate layer of pre-preg composite (a sheet of material formed from woven fibres and impregnated with resin), and covered with a further layer of pre-preg composite. These layers and waveguide can then be bonded together under heat and pressure (for example in an autoclave oven).

Forms of meander and concentrated meander other than coils, spirals and serpentine paths are contemplated, as are mixtures and combinations of any of these forms.

Further, embodiments are not necessarily limited to providing regularly spaced concentrated meanders, each meander having the same length of fibre and being contained within the same space. Certain other embodiments may provide differing forms of concentrated meander separated by differing lengths of linear portion fibre.

As discussed, the waveguide may be a single mode optical fibre. However in variant embodiments, a plurality of single mode fibres, arranged in parallel, may be provided at the waveguide. Thus the distributed sensor provides some redundancy such that should a first fibre malfunction, another fibre can be selected for illumination. Where such redundancy is provided, each of the fibres need not follow the same path. If redundant fibres are provided which follow different paths, then the system may be more resistant to failure as a result of localised damage.

Where the waveguide is for mounting on a surface, in general, and given the teaching herein, the particular desired form of the waveguide will be apparent from the characteristics of the surface and the characteristics of the task which the embodiment is put up to.

## Claims

1. A distributed sensor for mounting to a surface, the distributed sensor comprising:
a light source for generating an interrogatory light signal;
an optical waveguide having a first end and being arranged to admit at said first end the interrogatory light signal; and
a detector arranged to detect backscattered signals returned to the first end of the waveguide,
wherein the waveguide comprises at least one meander.

2. A distributed sensor according to claim 1 wherein each meander defines a detection region and the length of waveguide forming each meander will be at least twice the length of the detection region.

3. A distributed sensor according to claim 1 or claim 2
wherein the meander comprises a concentrated meander, the concentrated meander defining a detection region along the waveguide, and
wherein the sensor is operable such that the detector may detect signals returned from the detection region containing the concentrated meander.

4. A distributed sensor according to claim 3 wherein the waveguide comprises
a further concentrated meander defining a further detection region along the waveguide and wherein the detector is operable to detect signals from the further detection region associated with the further concentrated meander.

5. A distributed sensor according to any of claims 3 or 4
Wherein there the waveguide comprises a plurality of linear sections interconnecting a plurality of concentrated meanders and the waveguide is arranged to provide an array of concentrated meanders.

6. A distributed sensor according to any of claims 3 to 5
wherein the concentrated meander comprises the form of a coil, or a spiral or a serpentine path.

7. A distributed sensor according to claim 1 wherein the meander is a regular continuous meander.

8. A distributed sensor according to any of the preceding claims Wherein the waveguide is a single mode optical fibre.

9. A distributed sensor according to any of the preceding claims
Wherein the sensor comprises a circulator, the circulator operably interconnecting the first end of the waveguide, the light source and the detector such that
signals output from the light source are input to the first end of the waveguide, and
signals output from the first end of the waveguide are input to the detector.

10. A distributed sensor according to any of the preceding claims
wherein the sensor is provided with a substrate, a first substrate surface having the waveguide mounted thereto and a second substrate surface being suitable for mounting to a surface.

11. A distributed sensor according to claim 10 wherein the sensor is provided with a cover mounted on top of the substrate and waveguide to thereby protectively enclose the waveguide.

12. A distributed sensor according to any one of claims 10 or 11
wherein at least one of the substrate or waveguide cover is provided by a layer of composite material.

13. A method of monitoring an area of interest at a surface, the method comprising:
I. providing a distributed sensor according to any of the previous claims, and
II. arranging the waveguide at the surface such that the meander is mounted at the area of interest.

14. A method according to claim 13 further comprising the steps of:
a) providing the waveguide with a concentrated meander defining a detection region, and
b) mounting the concentrated meander at the area of interest.

15. A method according to claim 14 further comprising the steps of:
i) determining the inherent spatial resolution of the distributed sensor system,
ii) determining a target spatial resolution, the target spatial resolution being finer that the inherent spatial resolution, and
iii) providing a plurality of concentrated meanders to define a plurality of detection regions spaced at an interval corresponding to the target spatial resolution where sufficient waveguide material is arranged within the concentrated meander to effect the target spatial resolution.
